（19）

Europäisches
Patentamt
European
Patent Office
Office européen
des brevets

(11)　**EP 2 666 360 A1**

(12)　　　　　**EUROPEAN PATENT APPLICATION**

(43) Date of publication:
　　**27.11.2013　Bulletin 2013/48**

(21) Application number: **12004058.9**

(22) Date of filing: **24.05.2012**

(51) Int Cl.:
　　*A01N 63/00* (2006.01)　　　　*A01N 63/02* (2006.01)
　　*A01N 63/04* (2006.01)　　　　*A01N 59/12* (2006.01)
　　*A01N 59/20* (2006.01)　　　　*A01P 1/00* (2006.01)

(84) Designated Contracting States:
　　**AL AT BE BG CH CY CZ DE DK EE ES FI FR GB
　　GR HR HU IE IS IT LI LT LU LV MC MK MT NL NO
　　PL PT RO RS SE SI SK SM TR**
　　Designated Extension States:
　　**BA ME**

(71) Applicant: **EMPA Eidgenössische
　　Materialprüfungs- und
　　Forschungsanstalt
　　8600 Dübendorf (CH)**

(72) Inventors:
　　• **Schubert, Mark
　　　9014 St. Gallen (CH)**
　　• **Ihssen, Julian
　　　9014 St. Gallen (CH)**

(74) Representative: **Rüedi, Regula Béatrice
　　C/o E. Blum & Co. AG
　　Vorderberg 11
　　8044 Zürich (CH)**

(54)　**Wood protection against microorganisms by laccase-catalysed iodination**

(57)　　A method for protecting a phenolic substances comprising material like wood against vermins, in particular microorganisms, comprises treating said phenolic substances comprising material with iodide in the presence of laccase, in particular with a liquid composition comprising iodide and laccase.

　　Materials like wood treated by this method can be used as such or - if in form of small peaces like shavings or wood flour - together with a binder for protective coatings and/or laminates like antibacterial wood fibre plates, inner or outer panelling, wallpapers, and packagings.

EP 2 666 360 A1

Printed by Jouve, 75001 PARIS (FR)

## Description

Technical Field

The present invention concerns a method for preserving phenolic compounds comprising materials like wood and wood-derived materials against several microorganisms including bacteria, yeast, blue stain fungi and wood decay fungi by modification of phenolic compounds, in particular an environment friendly method.

Background Art

Convential products and methods for preserving wood against microorganisms often rely on toxic and hardly biodegradable chemicals which are prone to release in the environment by leaching. Several attempts to conserve wood by means of environmentally friendly products and methods have already been made. At least a slight antimicrobial effect of natural, biodegradable compounds such as thymol and isoeugenol against several microorganisms including bacteria, yeast, blue stain fungi and wood decay fungi have been found in previous studies (1,2,3,4,5,6). Results obtained by the present inventors in the scope of their invention were in good agreement with these former studies. However, the high leachability of these compounds from the wood surface decreases their effectiveness. In the literature the laccase-mediated biografting of natural phenols is postulated as an efficient method to circumvent leaching of antimicrobial phenolic compounds by binding them to lignocellulosic substrates without loss of their efficacy (7, 5, 8). Quite contrary to this, the results obtained by the present inventors suggest that laccase-catalysed polymerization of phenols to higher molecular weight products causes a considerable reduction of their antimicrobial activity both on agar plates and on Norway spruce wood surfaces. Analogous results were already reported by Park et al. (9) who investigated the chemical polymerization of antimicrobial phenols and benzoic acid monomers as well as by Rättö et al. (5) who showed that the inhibitory effect of vanillin and tannin on agar plates was less pronounced after polymerization by laccase. Voda et al. (10) tested several essential oil phenols, among them isoeugenol and thymol, against the white rot *Trametes versicolor* and the brown rot *Coniophora puteana.* They showed that *C. puteana* was more susceptible to the inhibitory action of the tested compounds than *T. versicolor* because it produced less extracellular laccase (which catalysed the oxidation of the phenolic compunds, thereby reducing their antifungal activity). Even though the present inventors could not detect a higher susceptibility of the brown rot *O. placenta* in comparison to *T. versicolor,* the results by Voda et al. (10) and the inventors own results suggest that an important function of laccases might be detoxification of bioactive compounds produced by plants (11, 12, 13), in addition to their well-known involvement in lignin degradation (13).

It is also already known that the commercial laccases of fungal origin are able to oxidise both substituted phenols and potassium iodide salt ($I^-$); however, the oxidation rate was found to be limited in the latter case, because of the low redox potential of the laccase ($\leq 0.8V$) (14, 38). Nevertheless, this limitation was overcome by small-molecular weight compounds, which act as redox mediators, expanding the catalytic substrate spectrum of laccases and oxidation rates of, e.g., lignin and iodide (14, 15, 38). When iodide is oxidized by laccase a microbiocidal solution is obtained (16, 17, 18), but this effect has never been applied or suggested to the field of wood protection.

The unsatisfying results obtained with so far investigated environmentally friendly preservation methods relying on natural phenolic compounds show the need for an improved method of wood preservation.

Disclosure of the Invention

Hence, it is a general object of the invention to provide a method for protecting phenolic substances comprising materials from attack by vermin like microorganisms, said method being environment friendly and providing a lasting effect even after leaching.

Now, in order to implement these and still further objects of the invention, which will become more readily apparent as the description proceeds, the method for protecting phenolic substances comprising materials (later on referred to as phenolic materials) from attack by microorganisms is manifested by the features that phenolic materials are treated with iodide in the presence of laccase.

Preferred phenolic substances are polyphenolic substances, in particular lignin.

A preferred phenolic material is wood either in form of large pieces like wooden boards, but also in form of small pieces like shavings, strands, splints or even wood flours.

The kind of iodide is not relevant as long as it is soluble and as long as the cation is not reactive under the chosen conditions. Preferred, however, are alkaline iodides or alkaline earth iodides, in particular potassium iodide.

For example potassium iodide was found to exhibit only limited antimicrobial effects. However, when iodide ($I^-$) is oxidised to tri-iodide ($I_3^-$), which is in equilibrium with elemental iodine ($I_2$), a highly microbiocidal solution is obtained, which kills a broad spectrum of organisms, including enteric bacteria, fungi and viruses (16, 17, 18). Iodine is inexpensive, bacterial resistance is unknown and allergic reactions are rare (17, 19).

It was now found that highly antimicrobial surfaces can be obtained by laccase-catalysed iodination of lignocellulose. Enzymatic iodination of wood leads to high resistance against colonization by different, in particular five classes of heterotrophic microorganisms, even after intensive leaching of the treated wood. Said five classes are Gram negative bacteria, Gram positive bacteria, yeasts, ascomycete fungi and basidiomycete fungi.

Furthermore, the performance of enzymatic wood iodination was found to be similar to the chemical preservative VP 7/ 260a (benchmark), which showed repeatedly a high effectiveness in protecting wood against bio-deterioration as reported in (20).

A suitable laccase is *T. versicolor* laccase that has the additional benefit that it is commercially available.

Not necessary but advantageous to improve the efficacy of the wood iodination process by reducing the required time, is the use of a natural or synthetic mediator. Suitable redox mediators that are efficient and preferably also cheap are available and comprise small-molecular weight compounds, like ABTS and/or ACS. Such mediators can be used in catalytic amounts.

Respectively treated wood has been found to exhibit good to excellent preservation even after several leaching cycles.

The method of the present invention can be used to treat large wood pieces for outdoor or indoor applications but also to treat small wood products like shavings, strands, splints, wood flours or even waste lignins (like waste lignin particles from paper mills and biorefineries) that can be admixed with other compounds for preserving products like preserving coatings or laminates.

Therefore further objects of the present invention are

- the use of wood and/or lignins treated according to the method above for the manufacturing of protective coatings and/or laminates like antibacterial wood fibre plates, inner or outer panelling, wallpapers, and packagings,
- a composition for treating phenolic substances comprising materials,
- a treated wood wherein the FTIR-ATR spectrum of a treated surface shows a difference if compared with the FTIR-ATR spectrum of a not treated surface of the same wood,
- the use of a combination of laccase and iodide for protecting phenolic substances comprising materials against vermins, in particular microorganisms,
- the use of a composition comprising wood and/or lignin treated according to the invention and a binder for producing vermin controlled products like wood fibre plates, inner or outer panelling, wallpapers, and packagings as well as
- the use of a composition comprising the wood and/or lignin treated according to the invention and a binder for providing substrates with a vermin controlling coating.
- the use of laccase for covalent iodination of monomeric phenols, oligomeric phenols and polymeric phenols. Said phenols may be unsubstituted or substituted and preferably are substituted.

Brief Description of the Drawings

The invention will be better understood and objects other than those set forth above will become apparent when consideration is given to the following detailed description thereof. Such description makes reference to the annexed drawings, wherein:

Figure 1 shows agar plates prepared as follows: The surface of leached wood specimens (batch 1) was inoculated with cell suspensions of *E. coli* ATCC 11229, incubated for 18 h and stamped on LB agar (n = 3). Figure 1a) shows laccase + isoeugenol (Iso-L) treatment, Figure 1b) iodide (I50) control treatment and Figure Ic) bactericidal effect of laccase + iodide treatment (I50-L = enzymatic wood iodination)

Figure 2 shows mass loss [%] of wood (batch 2) caused by wood decay fungi *Oligoporus placenta* (a) and *Trametes versicolor* (b) after 12 weeks incubation time (n = 6). Wood samples were treated as described in the Experimental Part section. Significant reduction of mass loss compared to control is marked by * = $P<0.05$ and ** = $P<0.001$ (Tukey's-HSD-test). Mediator = ACS (50 $\mu$M).

Figure 3 shows mass loss [%] of wood (batch 2) caused by *Oligoporus placenta* (a) and *Trametes versicolor* (b) after 6 weeks incubation time (n = 6). Significant reduction of mass loss compared to control is marked by * = $P<0.05$ and ** = $P<0.001$ (Tukey's-HSD-test). Mediator = ACS (50 $\mu$M).

Figure 4 shows vector normalized and baseline corrected FTIR-ATR spectra of treated and non-leached (a) and leached (b) Norway spruce wood.

Figure 5 shows pH-activity profiles for laccase catalysed oxidation of iodide with (a) 10 $\mu$M ABTS and (b) 50 $\mu$M ACS as mediators.

Figure 6 shows a schematic view of laccase-catalysed iodination of substituted phenols (Example vanillin → 5-iodo-vanillin (4-hydroxy-3-iodo-5-methoxybenzaldehyde)).

Figure 7 shows HPLC chromatograms and corresponding MS spectra of laccase-catalysed iodination of substituted phenols demonstrating the formation of iodo-vanillin from vanillin and iodide by laccase catalysis, both without and with the mediator ABTS.

Modes for carrying out the invention

Phenolic substances comprising materials like wood can be protected against vermins, in particular microorganisms, by treating said phenolic substances comprising material with iodide in the presence of laccase, in particular with a liquid composition comprising iodide and laccase.

In the context of the present invention, "liquid" also encompasses a viscous composition. Important is that the conditions are such that the laccase is active, e.g. an aqueous liquid of respective laccase concentration, pH and salt content and that the substance to be treated is sufficiently and preferably homogeneously in contact with the laccase and the iodide.

The method of the present invention also encompasses a procedure wherein the substance is first combined with the iodide and then treated with a suspension/solution of active laccase.

A preferred phenolic substance comprises or consists of a polyphenolic substance, preferably lignin, and a preferred phenolic substances comprising material (phenolic material) is wood.

Other phenolic substances comprise monomeric phenols, oligomeric phenols and polymeric phenols. Such phenols encompass vanillin-like compounds, in particular vanillin such as vanillin itself but also similar compounds that e.g. comprise another alkoxygroup ortho to a hydroxy group like ethylvanillin, but also substituents other than an aldehyde para to a hydroxyl group like isoeugenol, coniferyl alcohol, methyl vanillate, acetovanillone or ferulic acid.

The iodide is not critical as long as it is soluble and as long as the cations do not affect the reaction. Preferred iodides are alkaline and/or alkaline earth iodides, in particular potassium iodide.

Also the laccase is not critical, but presently preferred are laccases derived from white rot fungi, most preferably _T. versicolor_ laccase, a laccase that has the advantage that it is commercially available.

Although not necessary for obtaining the desired result but advantageous for speeding up the reaction, a redox mediator may be used. Such redox mediator usually is a small-molecular weight compound like a compound with molecular weight of 100 to 1000. Presently preferred mediators are 2,2-azino-bis(3-ethylbenzothiazoline-6-sulfonic acid) (ABTS) and/or acetosyringone (ACS). These mediators can be used in catalytic amounts such as 1 to 200 $\mu$M, preferably 10 to 100 $\mu$M.

The laccase and the iodide are generally used in form of an aqueous composition comprising the laccase in a concentration of 0.05 to 20 U/ml like about 10 U/ml, and/or the iodide in a concentration of 1 to 100 mM, like about 50 mM, said composition having an acidic to neutral pH, in particular a pH of 3-6.5, like about 4.5.

Dependent on the method used for applying the iodide, the laccase and optionally the mediator, the amounts needed may significantly vary. Suitable amounts/concentrations can easily be found by treating pieces of the lignin comprising material with different concentrations of the compounds followed by inocculation with e.g. fungi and storage under conditions favorable for development of the fungi.

In the method used in the herein presented experiments (see Experimental part), iodide in amounts of at least $0.05\mu$mol/cm$^2$ such as 1.3 $\mu$mol/cm$^2$, already showed good effect, in particular in non-leached applications. For leached applications a minimal iodide amount per cm$^2$ surface usually is about 5 $\mu$mol and preferred are amounts of 10 to 70 $\mu$mol/cm$^2$.

The phenolic substances comprising material, in particular wood, can have any size or any form like the form of large wood pieces for outdoor or indoor applications but also the form of small products, like shavings, strands, splints, wood flours, or even waste lignin particles from paper mills and biorefineries. The small products are especially suited for being used in bonded materials like protective coatings and/or laminates like wood fibre plates, inner or outer panelling, wallpapers, and packagings.

Also a subject of the present invention is a composition for treating phenolic substances comprising materials as defined above, said composition being an aqueous composition comprising the laccase in a concentration of 0.05 to 2 U/ml like about 0.12 U/ml, and/or the iodide in a concentration of 1 to 100 mM, like about 50 mM, said composition having a pH of 3-6.5.

Wood treated according to the present invention shows a difference in the FTIR-ATR spectrum of the treated surface if compared with the FTIR-ATR spectrum of a not treated surface of the same wood:

- For an enzymatically iodinated, non-leached wood enhanced absorption was found at 1636cm$^{-1}$ (absorbed O-H and conjugated C=O stretch vibration), 1590, 1508cm$^{-1}$ (both aromatic ring vibration in lignin) and 1452cm$^{-1}$ (C-H deformation in lignin and carbohydrates),
- For an enzymatically iodinated, leached wood enhanced absorption was still discernible at 1636cm$^{-1}$ and 1590cm$^{-1}$; while the bands at e.g. 1510 and 1452cm$^{-1}$ showed similar intensities to those of the untreated, leached control wood.

A combination of laccase and iodide can be used for protecting phenolic substances comprising materials as defined in any of the preceding claims against vermins, in particular microorganisms. Such microorganisms are e.g. bacteria, yeast, blue stain fungi and wood decay fungi.

A composition comprising laccase and iodide and a phenolic substances comprising material and a binder can also be used for producing vermin controlled products like microorganisms controlled products such as wood fibre plates, inner or outer panelling, wallpapers, and packagings.

In addition, a composition comprising laccase and iodide and a phenolic substances comprising material and a binder can be used for providing substrates with a vermin controlling coating.

For all bonded applications a binder may be added. Such binders are not limited to but preferably are acrylates, epoxy resins, proteins (e.g. casein, soybean protein), alkyd resins and polyurethanes.

**Experimental part**

*Chemicals*

2,2-azino-bis(3-ethylbenzothiazoline-6-sulfonic acid) (ABTS), acetosyringone (ACS), 4-hydroxybenzoic acid (HBA), isoeugenol, thymol, vanillin and potassium iodide were supplied by Sigma-Aldrich, Switzerland. The chemical wood preservative VP 7/ 260a containing 3-iodo-2-propynyl butylcarbamate (IPBC) and 1-[[2-(2,4-dichlorophenyl)-4-propyl-1,3-dioxolan-2-yl]methyl]-1,2,4-triazole (propiconazole) were provided by ISP (International Speciality Products AG, Germany).

*Enzymatic assays*

The enzyme used in the study was a commercial laccase from *Trametes versicolor* (Sigma-Aldrich). Laccase activity was determined at room temperature (22-25°C) and pH 4.5 (citrate buffer) with 3mM 2,2-azino-bis(3-ethylbenzothiazoline-6-sulfonic acid)(ABTS) as substrate (21, 22). Reactions were performed in transparent polymethyl methacrylate (PMMA) cuvettes or polystyrene micro titer plates. Change in absorbance ($\Delta A$) at 420nm was recorded in intervals of 10sec for 3min. Samples with very high activities were diluted 10-fold with ddH$_2$O before using them in the assay. Volumetric activities were calculated using an extinction coefficient ($\varepsilon$) of 0.036$\mu$mol$^{-1}$ 1 cm$^{-1}$ (36000mol$^{-1}$ 1 cm$^{-1}$) (22), according to the following equation ($\Delta t$ in min, V in $\mu$l):

Laccase activity

$$(U\ 1^{-1})\ =\ \frac{\Delta A}{\Delta t \cdot \varepsilon} \cdot \frac{V_{total,\ assay}}{V_{sample}} \cdot dilution\ factor_{sample}$$

The ability of *T. versicolor* laccase to oxidize the phenolic compounds was investigated according to Kudanga et al. (23) with slight modifications. Laccase with a total activity of 0.12U ml$^{-1}$ was added to start the reaction containing 0.1mM of the respective phenolic compound in 100mM citrate buffer (pH 4.5). The reactions were monitored by UV/VIS-spectrophotometry in the wavelength scan mode from 200-900nm after 0, 5, 10min and 24h incubation time. The laccase-catalysed oxidation of iodide (I$^-$) to iodine (I$_2$) was monitored by the formation of triiodide (I$_3^-$) at 353nm (laccase activity 0.12U ml$^{-1}$, 50mM iodide, citrate buffer pH 4.5, extinction coefficient of I$_3^-$ $\varepsilon$ = 28000 mol$^{-1}$ 1 cm$^{-1}$) (24, 17). Xu (18) showed that the oxidation of iodide by laccase is slow because of its low redox potential. Therefore, to enhance at the same time reaction rates with iodide and oxidation rates of lignin, redox mediators were added in catalytic amounts. Well-known synthetic (ABTS) and natural (acetosyringone [ACS], 4-hydroxybenzoic acid [HBA]) laccase mediators were tested (25, 26). The latter (HBA) was described by Müller et al. (27) and Euring et al. (28) to be an efficient mediator for activating the fibre lignin for production of medium-density fibreboards (MDF). The pH optima for mediator-enhanced oxidation of iodide were determined using the McIlvain citrate-phoshate buffer series.

*Organisms and media*

All microorganism used were maintained in the culture collection of Empa, Swiss Federal Laboratories for Materials Science and Technology, Switzerland. The initial inoculum of all fungi was taken from cultures growing on 2% malt extract agar medium in Petri dishes stored at 4°C for no longer than 6 months. The following fungi were used: the yeast *Saccharomyces cerevisiae* A.C. van Wijk (DSM 70449); the ascomycetes *Aureobasidium pullulans* (de Bary) Arnaud (DSM 2404), *Ceratocystis picea* (Münch) H. & P. Sydow (DSM 4842), *Cladosporium herbarum* (Pers.: Fr.) Link (DSM 63422), *Discula pinicola* (Naum.) Petr. (DSM 4948); the basidiomycetes *Trametes versicolor* (L.: Fr.) Pilát (DSM 3086) and *Oligoporus placenta* (Fr.) Cooke (EMPA 45). *S. cerevisiae* was maintained frozen (-80°C) and cultivated on Sabouraud Dextrose Broth (SDB, Sigma). The Gram-negative bacterium *Escherichia coli* (ATCC 11229) and the Gram-positive pathogen *Staphylococcus aureus* (ATCC 6583) were maintained frozen (-80°C) and transferred for cultivation on TSB+YE (tryptic soy broth 15g l$^{-1}$, yeast extract 3g l$^{-1}$) and LB medium (yeast extract 5g l$^{-1}$, tryptone 10g l$^{-1}$, NaCl 10g l$^{-1}$), respectively. For solid media, 15g l$^{-1}$ agar was added.

*Laccase-catalysed iodination and polymerization of wood*

Wood specimens (batch 1: 10 x 10 x 5 mm, length x width x height used in the biotests 1 and batch 2: 20 x 15 x 10 mm used in the biotests 2), free of defects, were extracted longitudinally from boards of Norway spruce trees grown in Switzerland, in order to minimize the influence of natural variability. All specimens were conditioned at 23C° ($\pm$1°C) and 50% ($\pm$5%) relative humidity (RH) until they reached an equilibrium moisture content of approximately 8-10%. Prior to the wood treatment the specimens were sterilized by autoclaving for 20min at 121°C($\pm$1°C).

The enzymatic wood iodination and polymerisation were carried out by dipping three wood specimens of batch 1 in 30ml or 12 wood specimens of batch 2 in 200ml reaction solution (pH 4-6) containing one of the phenolic compounds (4mM), or potassium iodide (1 or 50mM) in the presence of laccase (10U ml$^{-1}$) and either 10$\mu$M ABTS for batch 1 or 100$\mu$M ACS for batch 2 under shaking (100rpm) for 18h at room temperature. Furthermore, to test the suitability of HBA (5mM) as mediator some additional experiments were performed. The chemical preservative VP 7/ 260a containing IPBC and propiconazole as active agents was used as a benchmark with a final concentration of 5% (v/v). The wood specimens were treated and used in the biological tests, with the following modifications:

Control = Wood treated with buffer
L = Wood treated with laccase alone
L-M = Wood treated with laccase and mediator
Iso = Wood treated with isoeugenol
Iso-L = Wood treated with isoeugenol and laccase
Iso-L-M = Wood treated with isoeugenol, laccase and mediator
Thy = Wood treated with thymol
Thy-L = Wood treated with thymol and laccase
Thy-L-M = Wood treated with thymol and laccase and mediator
Ix = Wood treated with 1 or 50mM iodide (x = concentration of iodide)
Ix-L = Wood treated with 1 or 50mM iodide and laccase
Ix-L-M = Wood treated with 1 or 50mM iodide, laccase and mediator
VP7 = Wood treated with VP 7/ 260a (IPBC and propiconazole)

After the reaction all wood specimens of batch 1 had undergone a leaching procedure comprising five cycles of incubation in ddH$_2$O (liquid volume min. 10 times the specimen volume, 100rpm, room temperature, 24h) and water exchange. Half of the wood specimens of batch 2 were exposed to leaching for two weeks including nine steps of water changing according to EN 84 (29), the other half was used without leaching in biotests.

*Biological tests*

The evaluation of the antimicrobial activity against the bacteria *E. coli* and *S. aureus* and the yeast *S. cerevisiae* of the iodinated and polymerised wood was performed in **biotests 1.** For this purpose a new assessment approach was developed. After wood treatment and leaching procedure, excess liquid was removed by placing the wood specimens on sterile paper towels and the wood surface was inoculated with 40$\mu$l of either bacteria or yeast suspension diluted to OD$_{600}$ = 0.1 in weak, buffered complex medium (SDB, LB or TSB+YE diluted 1:5 in phosphate buffered saline). The specimens were incubated under water saturated atmosphere for 18h at optimal temperature conditions (bacteria at 37°C and yeast at 30°C). Afterwards the inoculated wood surface was "stamped" for 2-3sec on agar plates using sterile forceps. Growth on agar plates was visually determined after incubation for 20-28h at the optimal temperature, giving the following growth values: 0 = no growth; 1 = weak growth; 2 = intermediate growth; 3 = strong growth and 4 = stamping area completely overgrown.

The resistance of the treated wood against blue stain and wood decay fungi was determined in **biotests 2** according to the European standards EN 152-2 (30) and EN 113 (31) with slight modifications. The EN 152 is a classical test for blue staining, originally intended to determine the effectiveness of a preservative treatment against blue stain in service. The treated wood samples were dipped into a spore suspension of *A. pullulans, C. picea, C. herbarum* and *D. pinicola* (cfu: > 10$^5$) and placed horizontally in a Kolle flask containing vermiculite (18g) which was inoculated additionally with 40ml of the spore suspension. The incubated specimens were stored in an incubation room at 22°C and 70% RH (6 weeks). After incubation the surface was evaluated by classifying the percentage of blue-stain discolouration from 0 to 5 according to Thwaites et al. (32) (Table 1).

**Table 1**: Determination of the blue stain discoloration

| Stain category | Description |
|---|---|
| 0 | No stain (0%) |
| 1 | Minimally stained (1-10%) |
| 2 | Mildly stained (11-20%) |
| 3 | Moderately stained (21-50%) |
| 4 | Heavily stained (51-80%) |
| 5 | Severely stained (81-100%) |

A mini-wood block test comparable with the European standard EN 113 (31) was carried out to assess fungal decay caused by the brown rot *O. placenta* and the white rot *T. versicolor.* The treated wood was aseptically added to fully colonised Petri dishes (135mm diameter, 2% malt extract agar (MEA)) by *O. placenta* and *T. versicolor* respectively and incubated at 22C° and 70% RH. The ability of the wood-decay fungi to degrade the wood was determined gravimetrically after incubation periods of 6  and 12 weeks and expressed as mass loss (%) according to EN 113 (31):

$$\text{Mass loss (\%)} = \frac{m_0 - m_1}{m_0} \cdot 100$$

$m_0$ = dry-weight of wood specimen before treatment; $m_1$ = dry-weight of the wood specimen after treatment.
In addition to the mentioned biotests 2 the antimicrobial activity of the reaction derivatives without wood was evaluated on agar plates (5), excluding the laccase-catalysed iodine solution. It was assumed that the iodine molecules would react with starch from malt to form polyiodide chains, which would prevent the antimicrobial effect (33). The laccase catalysis of the phenols was performed under shaking for 18h at room temperature as described above and the phenolic derivatives were added to 2% MEA after autoclaving to a final concentration of 4mM. The fungicide VP 7/ 260a were added to a concentration of 5% (v/v). The supplemented Petri dishes were inoculated in the centre with a mycelium agar disc (5mm diameter) taken from the sub-margin of 14 day old cultures of the ascomycetes *A. pullulans* and *D. pinicola* and the basidiomycetes *O. placenta* and *T. versicolor.* The fungal growth was estimated by measuring the colony diameter and the growth inhibition was expressed as % of reference grown on non-supplemented malt agar.

*Fourier transform infrared spectroscopy (FTIR-ATR)*

A spectrophotometer FTS-6000 with golden gate single reflection diamond ATR P/N 183 10500 Series (Portsman Instruments AG, Biel-Benken, Switzerland) was used for collecting the FTIR-ATR spectra. The size of the measuring area was 0.36 mm$^2$ and the resolution of the equipment was set to 8cm$^{-1}$ with 32 average scans. Contact  pressure was set to 100cN. After treatment the wood samples were dried and conditioned (23°C and 50% relative humidity). Three spectra were taken on both the radial and the tangential surface orientation of each specimen and averaged for further evaluation. The peak maxima were determined using the software Resolutions Pro® 188 (Digilab, Holliston, 189 USA). Baseline corrections with asymmetric least squares smoothing (34, 35) and the Savitzky-Golay algorithm (36) were performed for all spectra using Matlab® Software (ver. 7.10.0 MathWorks, R2010a). Subsequently, the spectra were vector normalized according to following equation:

$$x_i = \frac{y_i}{\sqrt{\sum_{j=1}^{n} (y_i)^2}}$$

$y_i$ = absorption value.

According to Pandey and Pitman (37) peak maxima values for lignin-associated bands were rationed against carbohydrate reference peaks to provide relative changes in the composition of the structural components.

*Statistical analysis*

Non-parametric data such as the ordinally scaled values of growth after stamping and blue stain discoloration were evaluated using the Kruskal-Wallis one way analysis of variance and the Mann-Whitney U-test for pairwise comparison of the groups. Data expressed as percentages, such as mass loss, were arcsine-transformed prior to analysis (ANOVA) and back-transformed to numerical values for visualization. Means were separated using Tukey's-HSD (Honestly Significant Difference) test at significance level $P<0.05$ and $P<0.001$. The statistical package used for all analyses was SPSS® (Version 17.0, SPSS Inc., Chicago, IL, USA).

*Biotransformation of vanillin*

Vanillin (4 mM in citrate-phosphate buffer pH 5.0) was reacted for 18 h at room temperature under gentle agitation in the presence of 50 mM potassium iodide and 2.5 U/mL of *T. versicolor* laccase. The total reaction volume was 2 mL. Reactions were performed with and without 10 μM ABTS as mediator. In a control reaction vanillin was incubated in the presence of potassium iodide without laccase. Educt and products were extracted with 0.5 mL ethyl acetate and analysed by HPLC-MS(C18 column, mobile phase acetonitrile + 0.1% formic acid). Aromatic compounds were analysed with a UV detector.

*Results*

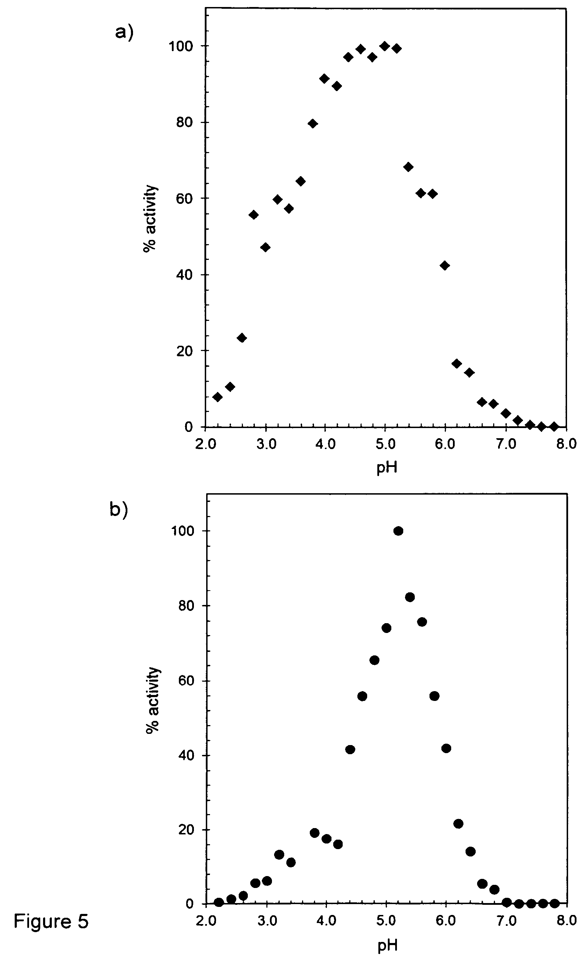

The monitoring of the enzymatic reaction by spectrophotometry showed that the commercial *Trametes versicolor* laccase was able to oxidize both isoeugenol and thymol, even at low laccase concentrations of 0.12U ml$^{-1}$. In the case of potassium iodide the direct enzymatic oxidation to tri-iodide occurred at low rates, but was detectable after overnight incubation. By using the mediators ABTS and ACS, laccase-catalysed tri-iodide formation was strongly increased to 0.13 μM min$^{-1}$ mg$^{-1}$ (pH 4, 10 μM mediator) and 0.89 μM min$^{-1}$ mg$^{-1}$ (pH 5, 50 μM mediator), respectively. The pH optimum was 4.6 with ABTS as mediator and 5.2 with ACS (Fig.5). HBA was found not to be a directly oxidizable substrate for laccase and not to have a function as mediator (data not shown).

The potential of iodination and polymerization of the wood to impart the surface an antimicrobial effect was evaluated by to well-established effectiveness tests according to European standards (30, 31), and a newly developed stamping method for examining the efficiency against bacteria and yeasts (biotests 1). All tests provided consistent and reproducible results.

The categorized growth after stamping of treated, leached wood inoculated with *E. coli, S. aureus* and *S. cerevisiae* is summarized in Table 2.

**Table 2**: Growth values after stamping of wood (batch 1) exposed to leaching ($\pm$ SE, n = 3)

| Treatments | *E. coli* | *S. aureus* | *S. cerevisiae* |
|---|---|---|---|
| Control | 4.0 ±0.0 | 3.7 ±0.3 | 3.3 ±0.3 |
| L | 4.0 ±0.0 | 3.7 ±0.3 | 3.7 ±0.3 |
| L-M | 3.7 ±0.3 | 3.7 ±0.3 | 3.7 ±0.3 |
| Iso | 4.0 ±0.0 | 0.0 ±0.0* | 0.0 ±0.0* |
| Iso-L | 4.0 ±0.0 | 2.0 ±0.0* | 2.3 ±0.3 |
| Thy | 1.3 ±0.3* | 0.0 ±0.0* | 0.0 ±0.0* |
| Thy-L-M | 4.0 ±0.0 | 2.7 ±0.7 | 3.0 ±0.0 |
| I50 | 4.0 ±0.0 | 3.0 ±0.6 | 2.7 ±0.3 |
| I50-L | 0.0 ±0.0* | 0.0 ±0.0* | 0.7 ±0.3* |
| I50-L-M | 0.0 ±0.0* | 0.0 ±0.0* | 0.0 ±0.0* |

Significant reduction of growth compared to control is marked by * = $P<0.05$ (Kruskal-Wallis-test and Mann-Whitney U-test for pairwise comparison). Mediator = ABTS (10 μM)

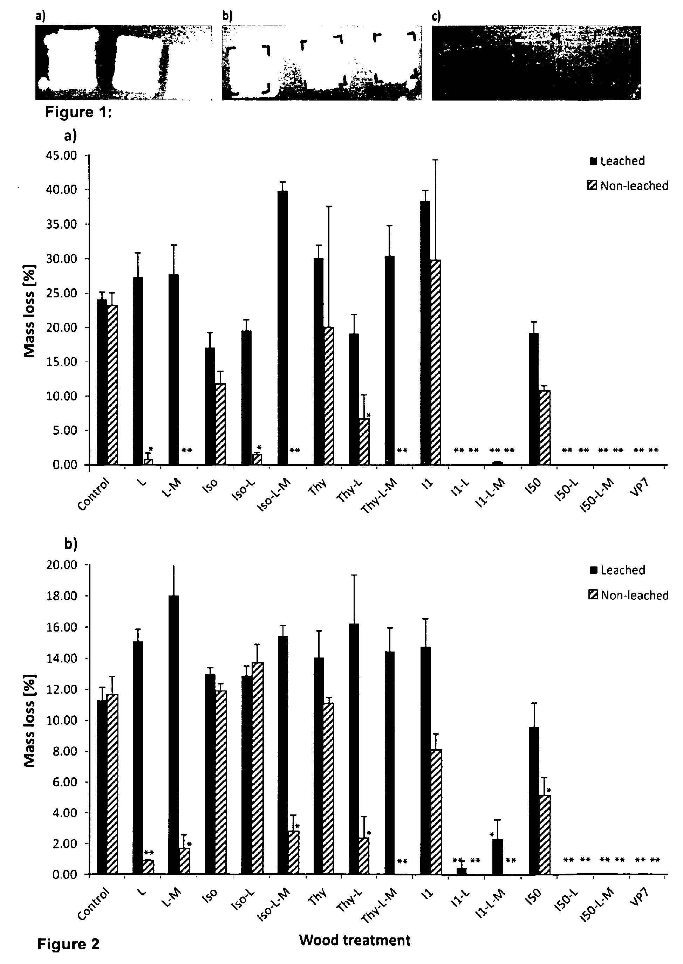

The control wood specimens supported a significant proliferation of *E. coli, S. aureus* and *S. cerevisiae* after 18h contact time, corresponding to growth values of 4.0, 3.7 and 3.3 respectively. Wood treatments with (i) laccase (L), (ii) laccase and mediator ABTS (L-M), (iii) laccase and isoeugenol (Iso-L)(Figure 1a), and (iv) laccase and thymol and mediator (Thy-L-M) had no inhibitory effect on the tested microorganisms and showed no significant difference to the control treatment with buffer (Table 2). Wood treatment with isoeugenol (Iso) and thymol (Thy) in the absence of laccase had a significant antimicrobial effect against the Gram-positive bacterium *S. aureus* and the yeast *S. cerevisiae* (growth values of 0.0), but only a limited effect against the Gram-negative *E. coli* (Iso = 4.0 and Thy = 1.3). The reaction of these phenolic compounds with laccase led to a loss of antimicrobial activity against *E. coli* as shown in Figure 1a for isoeugenol and particularly against *S. aureus* and *S. cerevisiae* as demonstrated by the high growth values (Table 2) which showed no significant difference to the control on a significance level of $P{\geq}0.05$.

By contrast, laccase-catalysed iodination of wood with and without mediator (150-L and 150-L-M) was highly effective, causing complete killing of inoculated *E. coli* (Figure 1c), *S. aureus* and *S. cerevisiae* cells (growth values of 0.0, Table 2). The control wood treatment with iodide (I50) in the absence of laccase showed no antimicrobial effect and a high proliferation of microorganisms (Figure 1b).

The efficacy of enzymatic iodination and grafting of natural phenolic compounds in protecting wood against higher wood destroying fungi (ascomycetes and basidiomycetes) was tested in biotests 2. Blue stain discoloration of the wood after a six week incubation period is summarized in Table 3.

**Table 3:** Blue stain discoloration of wood (batch 2) after 6 weeks of incubation ($\pm$SE, n = 6)

| Treatments | Non-leached | Leached |
| --- | --- | --- |
| Control | 3.2 $\pm$0.4 | 3.6 $\pm$0.5 |
| L | 3.3 $\pm$0.5 | 3.5 $\pm$0.5 |
| L-M | 4.2 $\pm$0.4 | 4.8 $\pm$0.3 |
| Iso | 2.3 $\pm$0.5* | 3.4 $\pm$0.5 |
| Iso-L | 4.7 $\pm$0.5 | 4.3 $\pm$0.3 |
| Iso-L-M | 4.6 $\pm$0.5 | 4.8 $\pm$0.4 |
| Thy | 2.5 $\pm$0.6 | 3.5 $\pm$0.3 |
| Thy-L | 3.8 $\pm$0.8 | 4.3 $\pm$0.4 |
| Thy-L-M | 4.3 $\pm$0.5 | 4.6 $\pm$0.4 |
| I1 | 2.2 $\pm$0.4* | 3.7 $\pm$0.4 |
| I1-L | 0.7 $\pm$0.5* | 0.9 $\pm$0.2* |
| I1-L-M | 1.1 $\pm$0.5* | 1.5 $\pm$0.5* |
| I50 | 0.8 $\pm$0.4* | 3.3 $\pm$0.3 |
| I50-L | 0.8 $\pm$0.4* | 0.9 $\pm$0.3* |
| I50-L-M | 0.5 $\pm$0.6* | 0.7 $\pm$0.3* |
| VP7 | 0.2 $\pm$0.4* | 0.6 $\pm$0.2* |

Significant reduction of blue stain discoloration compared to control is marked by * = $P<0.05$ (Tukey's-HSD-test). Mediator = ACS (50 $\mu$M)

The control wood specimens showed staining values of 3.2 for the non-leached and 3.6 for the leached wood. The discoloration of wood treated with laccase (L), laccase and the mediator ACS (L-M) or laccase and phenolic compounds (Iso/Thy-L, Iso/Thy-L-M) was comparable to that of the control (Table 3). Non-leached wood treated with isoeugenol (Iso) and thymol (Thy) showed a minor prevention of discoloration (2.3, 2.5), whereas the discoloration values of the corresponding leached wood blocks were similar to the control (3.4, 3.5). In the presence of the enzyme both phenolic compounds (Iso-L, Iso-L-M, Thy-L, Thy-L-M) showed no reduced discoloration, neither with nor without leaching (staining values of > 4, Table 3). In agreement with biotests 1, laccase-catalysed iodination (I1-L, I1-L-M, I50-L, I50-L-M) at iodide concentrations of 1 and 50mM was highly effective in protecting both non-leached as well as leached wood from colonization by blue stain fungi (Table 3). The effectiveness of enzymatic iodination was comparable to the highly effective chemical wood preservative VP 7/ 260a (Table 3). The control wood treatment with iodide (I1, I50) in the absence of laccase showed a fungicidal effect when no leaching was performed, whereas leached, iodide treated wood revealed similar staining intensities as the control wood specimens (Table 3). No further decrease of discoloration in the presence of the mediator ACS in combination with laccase and iodide could be detected. Without wanting to be limited by any interpretation, it is presumed that oxidation of iodide by laccase was already sufficient for obtaining strong antifungal effects.

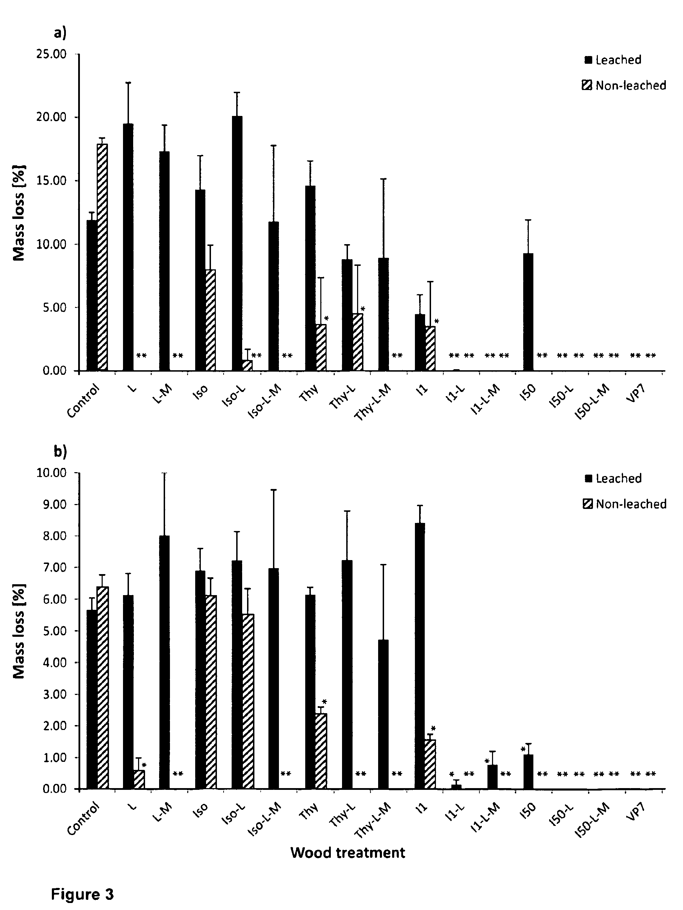

In addition to discoloration by ascomycete blue stain fungi, degradation of wood by basidiomycete fungi causing white and brown rot is a major problem, particularly in outdoor applications. In Figure 2 the wood mass losses (%) caused by the wood decay fungi *O. placenta* (brown rot) and *T. versicolor* (white rot) after the incubation period of 12 weeks are illustrated. For additional information, the results of the mass losses (%) after 6-weeks incubation are presented in Figure 3. Similarly to results obtained for bacteria, yeast and blue stain fungi the use of ioseugenol (Iso) and thymol (Thy) only had a minor effect on degradation of wood by basidiomycetes. After the leaching procedure the recorded mass losses were not significantly different to the control wood specimens (Figure 2). No fungicidal effect was detected for wood treated with phenols and laccase (Iso-L, Iso-L-M, Thy-L, Thy-L-M) and exposed to leaching. However, in comparison to the controls, mass losses were reduced for non-leached wood specimens treated with laccase and ACS as mediator in the presence or absence of phenolic compounds (Figure 2). Again, treatment of wood with laccase and iodide (I1-L, I1-L-M, 150-L, I50-L-M) was highly effective in preventing colonization by microorganisms ($P<0.05$). The effectiveness of laccase-iodide treatments in protecting non-leached and leached wood against degradation by either *O. placenta* or *T. versicolor* was comparable to the common wood preservative VP 7/ 260a (Figures 2).

The results of the biotests (1 and 2) indicated that oxidation of isoeugenol and thymol by laccase reduces the growth inhibitory properties of these phenolic compounds. Therefore, to obtain more knowledge regarding the impact of laccase on bioactive phenols, growth inhibition tests on Petri dishes were performed with two ascomycetes and two basidiomycetes (Table 4).

**Table 4**: Growth inhibition [%] on agar plate compared to control ($\pm$SE, n = 3)

| Treatments | A. alternata | D. pinicola | O. placenta | T. versicolor |
|---|---|---|---|---|
| L | 2.1 $\pm$1.1 | 19.2 $\pm$9.9 | 0.6 $\pm$0.3 | 0.8 $\pm$0.7 |
| Iso | 100 $\pm$0.0 | 100 $\pm$0.0 | 100 $\pm$0.0 | 100 $\pm$0.0 |
| Iso-L | 50.9 $\pm$1.0* | 30.0 $\pm$0.6* | 43.33 $\pm$0.6* | 41.0 $\pm$5.1* |
| Thy | 100 $\pm$0.0 | 100 $\pm$0.0 | 100 $\pm$0.0 | 100 $\pm$0.0 |
| Thy-L | 66.6 $\pm$2.1* | 84.8 $\pm$0.2* | 74.2 $\pm$1.2* | 100 $\pm$0.0 |
| VP7 | 100 $\pm$0.0 | 100 $\pm$0.0 | 100 $\pm$0.0 | 100 $\pm$0.0 |

Significant reduction of the antimicrobial effect of isoeugenol and thymol by laccase oxidation is marked by * = $P<0.05$ (t-test)

Isoeugenol and thymol added at a concentration of 4mM completely inhibited growth of all fungi and the effectiveness was similar to the fungicides present in the wood preservative VP 7/ 260a. However, oxidation of phenolic compounds with laccase significantly (P<0.05) reduced the antimicrobial effect (Table 4).

*FTIR-ATR*

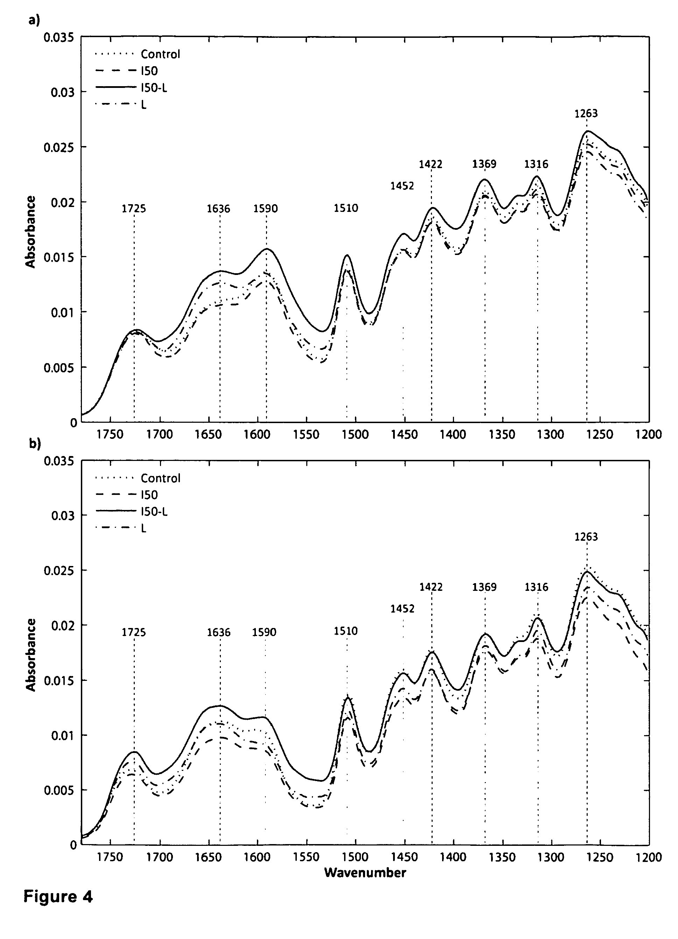

Due to the strong effect of enzymatic wood iodination revealed in biotests, possible modifications of lignocellulose in treated wood was analysed by FTIR-ATR. Overall, the FTIR spectra for treated and untreated wood showed only slight differences in the complex band between 1200 and 800cm$^{-1}$, which mainly represents the wood polysaccharides (data not shown). However, the section of the spectra ranging from 1800 to 1200cm$^{-1}$, mostly representing lignin constituents, revealed clear changes after laccase-iodide wood treatment (I50-L) which was partially resistant to leaching (Figure 4). The spectra of the enzymatically iodinated, non-leached wood (Figure 4a) showed the highest absorption particularly at 1636cm$^{-1}$ (absorbed O-H and conjugated C=O stretch vibration), 1590, 1508cm$^{-1}$ (both aromatic ring vibration in lignin) and 1452cm$^{-1}$ (C-H deformation in lignin and carbohydrates), whereas no pronounced difference at the band 1725cm$^{-1}$ (COOH/C=O in xylans) assigned to the carbonyl stretching vibration of carboxyl and ester groups and at the carbohydrate band 1316cm$^{-1}$ (C-H vibration in cellulose) were detected. After the two-weeks leaching procedure the structural changes in lignin were still discernible from the bands 1636 and 1590cm$^{-1}$; however, the other bands at e.g. 1510 and 1452cm$^{-1}$ showed similar intensities to those of the leached control wood (Figure 4b). The spectra of the non-leached wood treated with iodide in the absence of laccase (I50) showed similar intensities as the control spectrum (Figure 4a). With leaching the same treatment led to lower absorption intensities of most bands compared with the untreated control (Figure 4b). The spectra of both non-leached and leached wood treated only with laccase in the absence of iodide (L) revealed lower absorption intensities when compared to I50-L (Figure 4a and b). A comparison with the untreated control showed that the non-leached wood treated only with laccase (L) displayed at 1636cm$^{-1}$ a noticeably higher intensity (Figure 4a), but after leaching this effect was less pronounced and only the intensity of the band 1725cm$^{-1}$ was slightly higher (Figure 4b). The mentioned results are in good agreement with the 1636/1157, 1626/897, 1590/1157 and 1590/897cm$^{-1}$ ratios of band intensities calculated for each spectrum (Table 5).

**Table 5:** Ratios of selected lignin associated bands and carbohydrate reference bands.

| Treatments | Average ratio 1636/ 1157 | Average ratio 1636/ 897 | Average ratio 1590/ 1157 | Average ratio 1590/ 897 |
|---|---|---|---|---|
| Control | 0.42 | 0.40 | 0.52 | 0.49 |

(continued)

| Treatments | Average ratio 1636/1157 | Average ratio 1636/897 | Average ratio 1590/1157 | Average ratio 1590/897 |
|---|---|---|---|---|
| Iodide 50 | 0.41 | 0.39 | 0.50 | 0.46 |
| I50-L | 0.54 | 0.51 | 0.62 | 0.58 |
| L | 0.49 | 0.45 | 0.52 | 0.48 |
| Control-leached | 0.44 | 0.39 | 0.39 | 0.41 |
| I50-leached | 0.38 | 0.35 | 0.33 | 0.31 |
| I50-L-leached | 0.50 | 0.48 | 0.48 | 0.47 |
| L-leached | 0.46 | 0.45 | 0.38 | 0.37 |

The ratios of lignin-associated bands and carbohydrate reference bands reached the highest values for laccase-iodide treated wood (I50-L), and the values remained clearly above all other samples even after extensive leaching. These data suggest that enzymatic iodination of wood leads to structural changes of lignin, possibly due to the formation of aromatic organo-iodine moieties, e.g. as charge transfer complexes (39) or as covalently bound iodine (see below).

*Laccase-catalysed iodination of a phenolic compound*

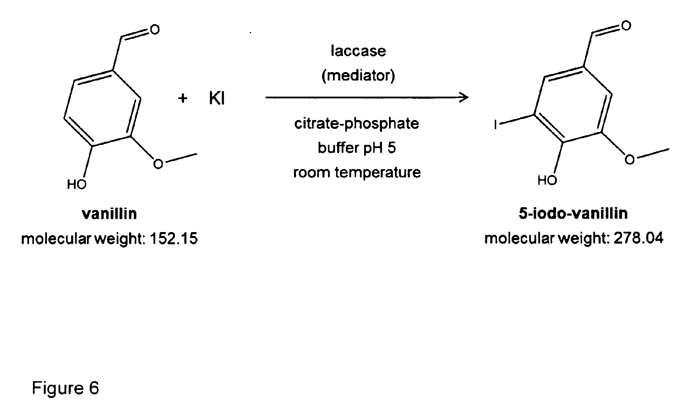

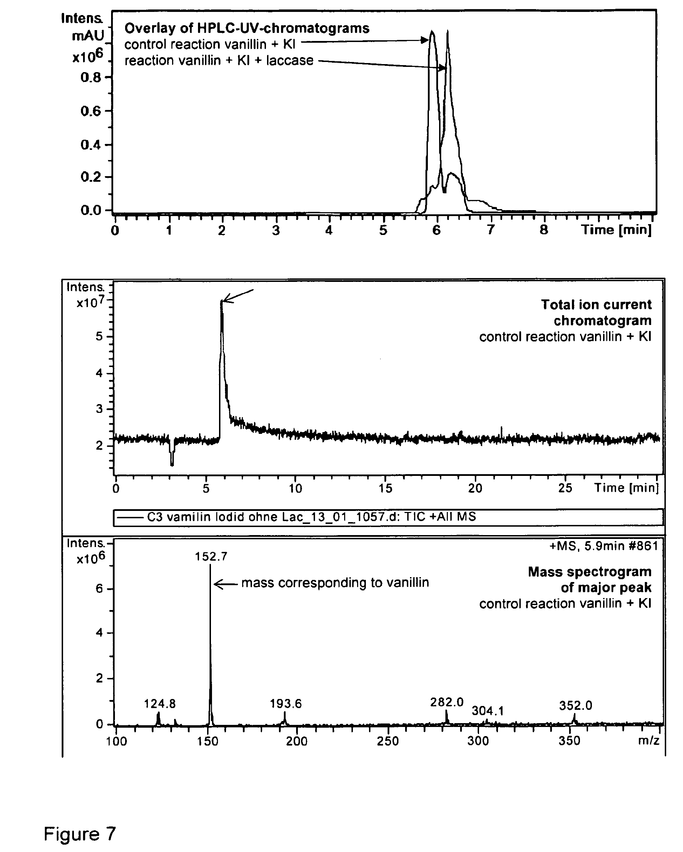

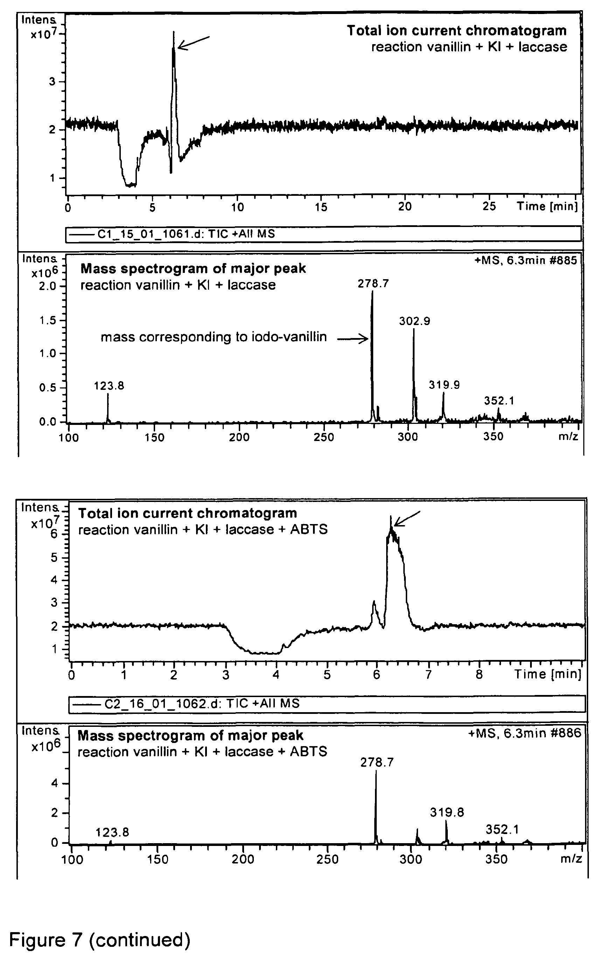

In order to investigate whether laccase is capable of covalent coupling of iodine to phenolic structures under the conditions used for wood treatment, we performed a biotransformation experiment using the phenolic compound vanillin (4-hydroxy-3-methoxybenzaldehyde) as educt. The methoxy-subsituted phenyl ring of vanillin has a similar structure as the dominating coniferly alcohol subunits of softwood lignin (e.g. spruce wood) (40). Vanillin is a well-known substrate of laccases (26). HPLC-MS analyis of biotransformations of vanillin and iodide with or without mediator show that laccase catalysed the formation of iodo-vanillin (Fig. 6,7). No peak with a mass spectrum corresponding to iodo-vanillin was detected when a control reaction without laccase was analysed, instead the mass spectrum of the major peak corresponded to the educt vanillin (Fig. 7). The vanillin peak with a retention time of 5.9 min either completely disappeared after the laccase-catalysed reaction or was strongly decreased (Fig. 7). The results indicate phenolic moeities of the lignin part of wood are iodinated by laccase-iodide treatment as described in the preceding sections, rendering a wash-out resistant, antimicrobial surface.

Vanillin can also be iodinated by a non-enzymatic reaction, but only under harsh conditions at 90°C and in the presence of 3 M of the strong acid $H_2SO_4$(41). The enzymatic reaction clearly has the advantage of being more environmentally friendly and applicable for treatments where high temperatures and/or strong acids are not possible or at least undesired. In particular the method of the present invention may be performed with water as the solvent, natural enzymes and a well known iodide. It needs no heating and no application of pressure and therefore is a low energy method.

While there are shown and described presently preferred embodiments of the invention, it is to be distinctly understood that the invention is not limited thereto but may be otherwise variously embodied and practiced within the scope of the following claims.

## Literature

1 Bakkali, F., S. Averbeck, D. Averbeck, and M. Waomar. 2008. Biological effects of essential oils - A review. Food Chem Toxicol 46:446-475.

2 Dorman, H. J. D., and S. G. Deans. 2000. Antimicrobial agents from plants: antibacterial activity of plant volatile oils. J Appl Microbiol 88:308-316.

3 Hammer, K. A., C. F. Carson, and T. V. Riley. 1999. Antimicrobial activity of essential oils and other plant extracts. J Appl Microbiol 86:985-990.

4 Maoz, M., C. Freitag, and J. J. Morrell. 2009. Potential synergy between natural product extracts for limiting fungal decay, Int J Res Group Wood Preserv, vol. IRG/WP 09-30495, Beijing, China.

5 Rättö, M., A. C. Ritschkoff, and L. Viikari. 2004. Enzymatically polymerized phenolic compounds as wood preservatives. Holzforschung 58:440-445.

6 Vanneste, J. L., R. A. Hill, S. J. Kay, R. L. Farrell, and P. T. Holland. 2002. Biological control of sapstain fungi with natural products and biological control agents: a review of the work carried out in New Zealand. Mycol Res 106: 228-232.

7 Elegir, G., A. Kindl, P. Sadocco, and M. Orlandi. 2008. Development of antimicrobial cellulose packaging through laccase-mediated grafting of phenolic compounds. Enzyme Microb Technol 43:84-92.

8 Schröder, M., N. Aichernig, G. M. Gübitz, and V. Kokol. 2007. Enzymatic coating of lignocellulosic surfaces with polyphenols. Biotechnol J 2:334-341.

9 Park, E. S., W. S. Moon, M. J. Song, M. N. Kim, K. H. Chung, and J. S. Yoon. 2001. Antimicrobial activity of phenol and benzoic acid derivatives. Int Biodet Biodegrad 47:209-214.

10 **Voda, K., B. Boh, M. Vrtač̌nik, and F. Pohleven.** 2003. Effect of the antifungal activity of oxygenated aromatic essential oil compounds on the white-rot *Trametes versicolor* and the brown-rot *Coniophora puteana.* Int Biodeter Biodegr **51**:51-59.

11 Bollag, J. M., and A. Leonowicz. 1984. Comparative Studies of Extracellular Fungal Laccases. Appl Environ Microbiol 48:849-854.

12 Ihssen, J., M. Schubert, F. W. M. R. Schwarze, and L. Thöny-Meyer. 2011. Efficient production of Al(OH)3-immobilized laccase with a Heterobasidion annosum strain selected by microplate screening. J Appl Microbiol 110: 924-934.

13 Thurston, C. F. 1994. The structure and function of fungal laccases. Microbiology 140:19-26.

14 Cañas, A. I., and S. Camarero. 2010. Laccases and their natural mediators: Biotechnological tools for sustainable eco-friendly processes. Biotechnol Adv 28:694-705.

15 Barreca, A. M., M. Fabbrini, C. Galli, P. Gentili, and S. Ljunggren. 2003. Laccase/mediated oxidation of a lignin model for improved delignification procedures. J Mol Catal B: Enzym 26:105-110.

16 Drouhet, E., and D. Bertrand. 1987. Evolution of antifungal agents: past, present, and future. Rev Infect Dis 9: S4-S14.

17 Kulys, J., I. Bratkovskaja, and R. Vidziunaite. 2005. Laccase-catalysed iodide oxidation in presence of methyl syringate. Biotechnol Bioeng 92:124-128.

18 Xu, F. 1996. Catalysis of novel enzymatic iodide oxidation by fungal laccase. Appl Biochem Biotechnol 59:221-230.

19 Choi, S., J. G. McComb, M. L. Levy, I. Gonzalez-Gomez, and R. Bayston. 2003. Use of elemental iodine for shunt infection prophylaxis. Neurosurgery 52:908-912.

20 Schubert, M., T. Volkmer, C. Lehringer, and F. W. M. R. Schwarze. 2011. Resistance of bioincised wood treated with wood preservatives to blue-stain and wood-decay fungi. Int Biodet Biodegrad 65:108-115.

21 Herpoel, I., S. Moukha, L. Lesage-Meessen, J. Sigoillot, and M. Asther. 2000. Selection of Pycnoporus cinnabarinus strains for laccase production. FEMS Microbiol. Lett. 183:301-306.

22 Lomascolo, A., E. Record, I. Herpoel-Gimbert, M. Delattre, J. L. Robert, J. Georis, T. Dauvrin, J. C. Sigoillot, and M. Asther. 2003. Overproduction of laccase by a monokaryotic strain of Pycnoporus cinnabarinus using ethanol as inducer. J Appl Microbiol 94:618-624.

23 Kudanga, T., E. N. Prasetyo, J. Sipila, P. Nousiainen, P. Widsten, A. Kandelbauer, G. S. Nyanhongo, and G. Guebitz. 2008. Laccase-mediated wood surface functionalization. Eng Life Sci 8:297-302.

24 Alcalde, M., and T. Bulter. 2003. Colorimetric assays for screening laccases, p. 193-201. In F. H. Arnold and G. Georgiou (ed.), Directed Enzyme Evolution: Screening and Selection Methods, vol. 230.

25 Bourbonnais, R., and M. G. Paice. 1990. Oxidation of nonphenolic substrates - an expanded role for laccase in lignin biodegradation. FEBS Lett 267:99-102.

26 Camarero, S., D. Ibarra, M. J. Martinez, and A. T. Martinez. 2005. Lignin-derived compounds as efficient laccase mediators for decolorization of different types of recalcitrant dyes. Appl Environ Microbiol 71:1775-1784.

27 Müller, C., M. Euring, and A. Kharazipour. 2009. Enzymatic modification of wood fibres for activating their ability of self bonding. Int J Mater Prod Technol 36:189-199.

28 Euring, M., M. Rühl, N. Ritter, U. Kües, and A. Kharazipour. 2011. Laccase mediator systems for eco-friendly production of medium-density fiberboard (MDF) on a pilot scale: Physicochemical analysis of the reaction mechanism. Biotechnol J 6:1253-1261.

29 European Standard EN 84, 1997. Wood preservatives - Accelerated aging of treated wood prior to biological testing - Leaching procedure. European Committee for Standardization (CEN), Brussels, Belgium.

30 European Standard EN 152, 1988. Test methods for wood preservative - laboratory method for determining the preventive effectiveness treatment against blue stain in service - Part 2: other methods. European Committee for Standardisation (CEN), Brussels, Belgium.

31 European Standard EN 113, 1997. Wood preservatives. Test method for determining the protective effectiveness against wood destroying basidiomycetes-determination of the toxic values. European Committee for Standardization (CEN), Brussels, Belgium.

32 Thwaites, J. M., R. L. Farrell, K. Hata, P. Carter, and M. Lausberg. 2004. Sapstain fungi on Pinus radiata logs - from New Zealand Forest to export in Japan. J Wood Sci 50:459-465.

33 Dhar, N. R. 1923. The starch-iodine reaction. J Phys Chem 28:125-130.

34 Eilers, P. H. C. 2004. Parametric time warping. Anal Chem 76:404-411.

35 Eilers, P. H. C. 2003. A perfect smoother. Anal Chem 75:3631-3636.

36 Savitzky, A., and M. J. E. Golay. 1964. Smoothing and differentiation of data by simplified least squares procedures. Anal Chem 36:1627-1639.

37 Pandey, K. K., and A. J. Pitman. 2003. FTIR studies of the changes in wood chemistry following decay by brown-rot and white-rot fungi. Int Biodet Biodegrad 52:151-160.

38 Kulys, J., I. Bratkovskaja, and R. Vidziunaite. 2005. Laccase-catalysed iodide oxidation in presence of methyl syringate. Biotechnol Bioeng 92:124-128.

39 Deng, Y., Feng, X., Zhou, M., Qian, Y., Yu, H. and X. Qiu. 2011. Investigation of aggregation and assembly of alkali lignin using iodine as a probe. Biomacromolecules 12:116-1125.

40 Zakzeski, J., Bruijnincx, P.C.A., Jongerius,A.L., B.M. Weckhuysen. 2010. The catalytic valorization of lignin for the production of renewable chemicals. Chem Rev 110:3552-3599.

41 **Cooper, G.K. and L.G. Harruff.** 1984. Process of hydroxylation of an aromatic carbonyl compound. Patent No. US4465864.

## Claims

1. A method for protecting a phenolic substances comprising material like wood against vermins, in particular microorganisms, comprising treating said phenolic substances comprising material with iodide in the presence of laccase, in particular with a liquid composition comprising iodide and laccase.

2. The method of claim 1 wherein the phenolic substance comprises or consists of a polyphenolic substance, preferably lignin, such as lignin in the form of lignocellulose.

3. The method of claim 1 or 2 wherein the phenolic substances comprising material is wood.

4. The method of any of the preceding claims wherein the iodide is an alkaline or an alkaline earth iodide, in particular potassium iodide

5. The method of any of the preceding claims wherein the laccase is derived from white rot fungal species, preferably *T. versicolor* laccase.

6. The method of any of the preceding claims comprising a redox mediator said redox mediator being a small-molecular weight compound like a compound with molecular weight of 100 to 1000, preferably 2,2-azino-bis(3-ethylbenzothiazoline-6-sulfonic acid) (ABTS) and/or acetosyringone (ACS), especially ABTS and/or ACS in catalytic amounts such as 1 to 200 $\mu$M, preferably 10 to 100 $\mu$M.

7. The method of any of the preceding claims wherein the laccase and the iodide is used in form of an an aqueous composition comprising the laccase in a concentration of 0.05 to 2 U/ml like about 0.12 U/ml, and/or the iodide in a concentration of 1 to 100 mM, like about 50 mM, said composition having a pH of 3-6.5.

8. The method of any of the preceding claims wherein the phenolic substances comprising material, in particular wood, is in the form of large wood pieces for outdoor or indoor applications and/or in the form of small products like shavings, strands, splints or even wood flours.

9. Use of wood treated according to the method above for the manufacturing of protective coatings and/or laminates like antibacterial wood fibre plates, inner or outer panelling, wallpapers, and packagings.

10. A composition for treating phenolic substances comprising materials as defined in any of the preceding claims, said composition being an aqueous composition comprising the laccase in a concentration of 0.05 to 2 U/ml like about 0.12 U/ml, and/or the iodide in a concentration of 1 to 100 mM, like about 50 mM, said composition having a pH of 3-6.5, like about 4.5

11. A treated wood wherein the FTIR-ATR spectrum of a treated surface shows a difference if compared with the FTIR-ATR spectrum of a not treated surface of the same wood, said difference comprising

   - for an enzymatically iodinated, non-leached wood enhanced absorption at 1636cm$^{-1}$ (absorbed O-H and conjugated C=O stretch vibration), 1590, 1508cm$^{-1}$ (both aromatic ring vibration in lignin) and 1452cm$^{-1}$ (C-H deformation in lignin and carbohydrates),
- for an enzymatically iodinated, leached wood enhanced absorption at 1636cm$^{-1}$ and 1590cm$^{-1}$.

12. Use of a combination of laccase and iodide for protecting phenolic substances comprising materials as defined in any of the preceding claims against vermins, in particular microorganisms.

13. Use of a composition comprising the product of the method of any of claims 1 to 8 or the treated wood of claim 11 and a binder for producing vermin controlled products like wood fibre plates, inner or outer panelling, wallpapers, and packagings.

14. Use of a composition comprising the product of the method of any of claims 1 to 8 or the treated wood of claim 11 and a binder for providing substrates with a vermin controlling coating.

15. A method for preparing iodinated monomeric phenolic substances, iodinated oligomeric phenolic substances or iodinated polymeric phenolic substances, in particular vanillin, said method comprising treating a monomeric phenolic substance and/or an oligomeric phenolic substance and/or a polymeric phenolic substance with a combination of laccase and iodide either with or without a mediator.

16. Use of a combination of laccase and iodide either with or without a mediator for iodination of monomeric phenolic substances, oligomeric phenolic substances or polymeric phenolic substances, in particular for the iodination of vanillin.

17. Use of a composition comprising the product of the method of any of claims 1 to 8 or 15 or a product of the use of claim 16 as additive for providing polymers and coatings and composite materials with vermin controlling properties.

a) b) c)

**Figure 1:**

**Figure 2**

Figure 3

Figure 4

a)

b)

Figure 5

vanillin
molecular weight: 152.15

5-iodo-vanillin
molecular weight: 278.04

Figure 6

EP 2 666 360 A1

Figure 7

20

Figure 7 (continued)

EP 2 666 360 A1

| | Europäisches Patentamt<br>European Patent Office<br>Office européen des brevets | **EUROPEAN SEARCH REPORT** | Application Number<br>EP 12 00 4058 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/090542 A1 (NOVOZYMES AS [DK]; DANIELSEN STEFFEN [DK]; CHRISTENSEN BJOERN EGGERT []) 6 November 2003 (2003-11-06)<br>* page 2, lines 5-8 *<br>* page 14, lines 5-11 *<br>* Examples *<br>----- | 1-6, 8-14,17 | INV.<br>A01N63/00<br>A01N63/02<br>A01N63/04<br>A01N59/12<br>A01N59/20<br>A01P1/00 |
| Y | WO 96/16165 A1 (NOVO NORDISK BIOTECH INC [US]) 30 May 1996 (1996-05-30)<br>* page 2, lines 20-33 *<br>----- | 15,16 | |
| Y | JAY E. TAYLOR ET AL: "The Mechanism of the Iodination of Phenols",<br>THE OHIO JOURNAL OF SCIENCE,<br>vol. LIII, no. 1,<br>1 January 1953 (1953-01-01), pages 37-41,<br>XP55042086,<br>ISSN: 0030-0950<br>* the whole document *<br>----- | 15,16 | |
| | | | **TECHNICAL FIELDS SEARCHED (IPC)**<br><br>A01N |

The present search report has been drawn up for all claims

| Place of search | Date of completion of the search | Examiner |
|---|---|---|
| Munich | 24 October 2012 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

EP 2 666 360 A1

**ANNEX TO THE EUROPEAN SEARCH REPORT
ON EUROPEAN PATENT APPLICATION NO.**

EP 12 00 4058

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2012

| Patent document cited in search report | | Publication date | Patent family member(s) | | Publication date |
|---|---|---|---|---|---|
| WO 03090542 | A1 | 06-11-2003 | AT | 406099 T | 15-09-2008 |
| | | | AU | 2003221466 A1 | 10-11-2003 |
| | | | CN | 1649499 A | 03-08-2005 |
| | | | DK | 1501363 T3 | 15-12-2008 |
| | | | EP | 1501363 A1 | 02-02-2005 |
| | | | IL | 164389 A | 20-07-2009 |
| | | | US | 2005153856 A1 | 14-07-2005 |
| | | | WO | 03090542 A1 | 06-11-2003 |
| WO 9616165 | A1 | 30-05-1996 | AU | 693304 B2 | 25-06-1998 |
| | | | AU | 4288696 A | 17-06-1996 |
| | | | BR | 9509745 A | 21-10-1997 |
| | | | CA | 2205814 A1 | 30-05-1996 |
| | | | CN | 1170436 A | 14-01-1998 |
| | | | EP | 0792353 A1 | 03-09-1997 |
| | | | FI | 972158 A | 21-07-1997 |
| | | | JP | 2894844 B2 | 24-05-1999 |
| | | | JP | H10504199 A | 28-04-1998 |
| | | | US | 5766896 A | 16-06-1998 |
| | | | WO | 9616165 A1 | 30-05-1996 |

**EP 2 666 360 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4465864 A

**Non-patent literature cited in the description**

- **BAKKALI, F. ; S. AVERBECK ; D. AVERBECK ; M. WAOMAR.** Biological effects of essential oils - A review. *Food Chem Toxicol,* 2008, vol. 46, 446-475
- **DORMAN, H. J. D ; S. G. DEANS.** Antimicrobial agents from plants: antibacterial activity of plant volatile oils. *J Appl Microbiol,* 2000, vol. 88, 308-316
- **HAMMER, K. A. ; C. F. CARSON ; T. V. RILEY.** Antimicrobial activity of essential oils and other plant extracts. *J Appl Microbiol,* 1999, vol. 86, 985-990
- **MAOZ, M. ; C. FREITAG ; J. J. MORRELL.** Potential synergy between natural product extracts for limiting fungal decay. *Int J Res Group Wood Preserv,* 2009
- **RÄTTÖ, M. ; A. C. RITSCHKOFF ; L. VIIKARI.** Enzymatically polymerized phenolic compounds as wood preservatives. *Holzforschung,* 2004, vol. 58, 440-445
- **VANNESTE, J. L. ; R. A. HILL ; S. J. KAY ; R. L. FARRELL ; P. T. HOLLAND.** Biological control of sapstain fungi with natural products and biological control agents: a review of the work carried out in New Zealand. *Mycol Res,* 2002, vol. 106, 228-232
- **ELEGIR, G. ; A. KINDL ; P. SADOCCO ; M. ORLANDI.** Development of antimicrobial cellulose packaging through laccase-mediated grafting of phenolic compounds. *Enzyme Microb Technol,* 2008, vol. 43, 84-92
- **SCHRÖDER, M. ; N. AICHERNIG ; G. M. GÜBITZ ; V. KOKOL.** Enzymatic coating of lignocellulosic surfaces with polyphenols. *Biotechnol J,* 2007, vol. 2, 334-341
- **PARK ; E. S. ; W. S. MOON ; M. J. SONG ; M. N. KIM ; K. H. CHUNG ; J. S. YOON.** Antimicrobial activity of phenol and benzoic acid derivatives. *Int Biodet Biodegrad,* 2001, vol. 47, 209-214
- **BOLLAG, J. M. ; A. LEONOWICZ.** Comparative Studies of Extracellular Fungal Laccases. *Appl Environ Microbiol,* 1984, vol. 48, 849-854
- **IHSSEN, J. ; M. SCHUBERT ; F. W. M. R. SCHWARZE ; L. THÖNY-MEYER.** Efficient production of Al(OH)3-immobilized laccase with a Heterobasidion annosum strain selected by microplate screening. *J Appl Microbiol,* 2011, vol. 110, 924-934
- **THURSTON, C. F.** The structure and function of fungal laccases. *Microbiology,* 1994, vol. 140, 19-26
- **CAÑAS, A. I. ; S. CAMARERO.** Laccases and their natural mediators: Biotechnological tools for sustainable eco-friendly processes. *Biotechnol Adv,* 2010, vol. 28, 694-705
- **BARRECA, A. M. ; M. FABBRINI ; C. GALLI ; P. GENTILI ; S. LJUNGGREN.** Laccase/mediated oxidation of a lignin model for improved delignification procedures. *J Mol Catal B: Enzym,* 2003, vol. 26, 105-110
- **DROUHET, E. ; D. BERTRAND.** Evolution of antifungal agents: past, present, and future. *Rev Infect Dis,* 1987, vol. 9, S4-S14
- **KULYS, J. ; I. BRATKOVSKAJA ; R. VIDZIUNAITE.** Laccase-catalysed iodide oxidation in presence of methyl syringate. *Biotechnol Bioeng,* 2005, vol. 92, 124-128
- **XU, F.** Catalysis of novel enzymatic iodide oxidation by fungal laccase. *Appl Biochem Biotechnol,* 1996, vol. 59, 221-230
- **CHOI, S. ; J. G. MCCOMB ; M. L. LEVY ; I. GONZALEZ-GOMEZ ; R. BAYSTON.** Use of elemental iodine for shunt infection prophylaxis. *Neurosurgery,* 2003, vol. 52, 908-912
- **SCHUBERT, M. ; T. VOLKMER ; C. LEHRINGER ; F. W. M. R. SCHWARZE.** Resistance of bioincised wood treated with wood preservatives to blue-stain and wood-decay fungi. *Int Biodet Biodegrad,* 2011, vol. 65, 108-115
- **HERPOEL, I ; S. MOUKHA ; L. LESAGE-MEESSEN ; J. SIGOILLOT ; M. ASTHER.** Selection of Pycnoporus cinnabarinus strains for laccase production. *FEMS Microbiol. Lett.,* 2000, vol. 183, 301-306

- **LOMASCOLO, A. ; E. RECORD ; I. HERPOEL-GIMBER ; M. DELATTRE ; J. L. ROBERT ; J. GEORIS ; T. DAUVRIN ; J. C. SIGOILLOT ; M. ASTHER.** Overproduction of laccase by a monokaryotic strain of Pycnoporus cinnabarinus using ethanol as inducer. *J Appl Microbiol,* 2003, vol. 94, 618-624
- **KUDANGA, T. ; E. N. PRASETYO ; J. SIPILA ; P. NOUSIAINEN ; P. WIDSTEN ; A. KANDELBAUER ; G. S. NYANHONGO ; G. GUEBITZ.** Laccase-mediated wood surface functionalization. *Eng Life Sci,* 2008, vol. 8, 297-302
- Colorimetric assays for screening laccases. **ALCALDE, M. ; T. BULTER.** Directed Enzyme Evolution: Screening and Selection Methods. 2003, vol. 230, 193-201
- **BOURBONNAIS, R. ; M. G. PAICE.** Oxidation of nonphenolic substrates - an expanded role for laccase in lignin biodegradation. *FEBS Lett,* 1990, vol. 267, 99-102
- **CAMARERO, S. ; D. IBARRA ; M. J. MARTINEZ ; A. T. MARTINEZ.** Lignin-derived compounds as efficient laccase mediators for decolorization of different types of recalcitrant dyes. *Appl Environ Microbiol,* 2005, vol. 71, 1775-1784
- **MÜLLER, C. ; M. EURING ; A. KHARAZIPOUR.** Enzymatic modification of wood fibres for activating their ability of self bonding. *Int J Mater Prod Technol,* 2009, vol. 36, 189-199
- **EURING, M. ; M. RÜHL ; N. RITTER ; U. KÜES ; A. KHARAZIPOUR.** Laccase mediator systems for eco-friendly production of medium-density fiberboard (MDF) on a pilot scale: Physicochemical analysis of the reaction mechanism. *Biotechnol J,* 2011, vol. 6, 1253-1261
- **THWAITES, J. M. ; R. L. FARRELL ; K. HATA ; P. CARTER ; M. LAUSBERG.** Sapstain fungi on Pinus radiata logs - from New Zealand Forest to export in Japan. *J Wood Sci,* 2004, vol. 50, 459-465
- **DHAR, N. R.** The starch-iodine reaction. *J Phys Chem,* 1923, vol. 28, 125-130
- **EILERS, P. H. C.** Parametric time warping. *Anal Chem,* 2004, vol. 76, 404-411
- **EILERS, P. H. C.** A perfect smoother. *Anal Chem,* 2003, vol. 75, 3631-3636
- **SAVITZKY, A. ; M. J. E. GOLAY.** Smoothing and differentiation of data by simplified least squares procedures. *Anal Chem,* 1964, vol. 36, 1627-1639
- **PANDEY, K. K. ; A. J. PITMAN.** FTIR studies of the changes in wood chemistry following decay by brown-rot and white-rot fungi. *Int Biodet Biodegrad,* 2003, vol. 52, 151-160
- **DENG, Y. ; FENG, X. ; ZHOU, M. ; QIAN, Y. ; YU, H. ; X. QIU.** Investigation of aggregation and assembly of alkali lignin using iodine as a probe. *Biomacromolecules,* 2001, vol. 12, 116-1125
- **ZAKZESKI, J. ; BRUIJNINCX, P.C.A. ; JONGERIUS,A.L. ; B.M. WECKHUYSEN.** The catalytic valorization of lignin for the production of renewable chemicals. *Chem Rev,* 2010, vol. 110, 3552-3599